# EUROPÄISCHE PATENTSCHRIFT

(11) **EP 2 029 705 B1**
(45) Veröffentlichungstag und Bekanntmachung des Hinweises auf die Patenterteilung: **29.03.2017**
(21) Anmeldenummer: 07725027.2
(22) Anmeldetag: 09.05.2007
(51) Int. Cl.: C10L 5/44

(54) **VERFAHREN ZUR HERSTELLUNG VON BRENNSTOFFEN AUS BIOMASSE**
METHOD OF PRODUCING FUELS FROM BIOMASS
PROCEDE DE FABRICATION DE COMBUSTIBLES A PARTIR DE BIOMASSE

(30) Priorität: 10.05.2006 DE 102006021826
(43) Veröffentlichungstag der Anmeldung: 04.03.2009
(73) Patentinhaber: Werner, Hans, 81825 München (DE)
(72) Erfinder: Werner, Hans, 81825 München (DE)
(74) Vertreter: Leske, Thomas
(86) Internationale Anmeldenummer: PCT/EP2007/004105
(87) Internationale Veröffentlichungsnummer: WO 2007/128579

(56) Entgegenhaltungen:
- EP-A- 1 443 096
- EP-A1- 0 423 606
- WO-A-2004/046279
- WO-A-2005/035697
- DE-A1- 4 437 255
- US-A- 4 363 636
- US-A- 4 525 172

## Beschreibung

Die Erfindung betrifft ein Verfahren zur Herstellung von Brennstoffen und Dünger aus Biomasse, insbesondere aus Presswasser, welches bei einem Auspressen von Biomasse entsteht.
Neben fossilen Brennstoffen finden Energieträger in Form von Biomasse in zunehmenden Maße Verwendung. So werden in DE 102 10 167 A1 Brennstoffpresslinge vorzugsweise aus Pferdemist und in DE 102 07 811 A1 Presslinge aus feuchtem organischen Ausgangsmaterial durch mehrfaches Formpressen hergestellt. Darüber hinaus beschreibt EP 1 443 096 A1 ein Verfahren und eine Vorrichtung zur Herstellung von Brennstoffen aus Biomasse zu Granulat, Presslingen, Pellets, Briketts oder Ähnlichem.

DE 44 37 255 A1 beschreibt ein Verfahren, bei dem Biomasse schadstoffbelasteter Böden verbrannt wird, nachdem die Biomasse zuerst siliert und dann ausgepresst wurde.
Dabei ist allen vier Verfahren gemeinsam, dass die eingesetzte Biomasse, deren Feuchtigkeitsgehalt für eine Herstellung oder eine Nutzung als effektiver Brennstoff zu hoch ist, in einem oder mehreren Schritten ausgepresst wird. Dadurch wird erreicht, dass durch Verrichtung mechanischer Arbeit an der eingesetzten Biomasse viel der Biomasse inhärente Feuchtigkeit entzogen wird und so eine thermische Trocknungszeit der Biomasse, die zur Herstellung oder Nutzung von Biomassebrennstoff notwendig ist, erheblich reduziert wird.
Das durch das Auspressen entstehende Presswasser wird jedoch entsorgt oder dampfförmig in die Umgebung abgegeben. Dabei enthält das Presswasser noch verwertbare Bestandteile bzw. Brennstoffpartikel und, wie im Falle der DE 44 37 255 A1, unter Umständen einen hohen Anteil an Schadstoffen. Schadstoffe, welche der eingesetzten Biomasse inhärent sind, verbleiben beim Auspressen der Biomasse bevorzugt im Presswasser, welches dementsprechend geeignet behandelt werden muss.

WO 2005/035697 A offenbart ein Verfahren zur Verarbeitung tierischen Abfalls, wobei der Abfall ausgepresst wird, wobei Feststoff und eine wässerige Lösung entsteht, und Partikel, die in dem beim Auspressen entstehenden Presswasser enthalten sind, von dem Presswasser separiert und aufbereitet werden, dadurch gekennzeichnet, dass die von Presswasser separierten Partikel dem ausgepressten Abfall zugeführt werden und zusammen mit dem Abfall verarbeitet werden. Die Partikel werden in einem Vergaser verarbeitet. Dabei wird ein brennbares Gas produziert, welches zur Energieerzeugung genutzt wird.

Aufgabe der Erfindung ist es, ein Verfahren zur Herstellung von Biomassebrennstoff zur Verfügung zu stellen, wobei nahezu die gesamte zu Biomassebrennstoff verarbeitbare Masse der eingesetzten Biomasse verwertet wird.

Ein die Aufgabe lösendes Verfahren wird im Anspruch 1 zur Verfügung gestellt.
Weitere Ausführungen und vorteilhafte Weiterbildungen des erfindungsgemäßen Verfahrens werden in den Unteransprüchen 2 bis 7 dargestellt.

Ausgehend von dem Verfahren nach EP 1 443 096 A, bei dem die eingesetzte Biomasse nach einem ersten Zerkleinerungsschritt auspresst wird, verwertet das erfindungsgemäße Verfahren das bei dem Auspressen entstandene Presswasser, welches gemäß den vorgenannten Druckschriften für eine Biomassebrennstoffherstellung noch unberücksichtigt bleibt. Das erfindungsgemäße Verfahren ist jedoch nicht auf die Verwertung von Presswasser ausgepresster Biomassen beschränkt, sondern erstreckt sich auf alle mit organischem Material angereicherten und/oder verunreinigten Flüssigkeiten.

Laborergebnisse haben ergeben, dass in dem Presswasser bis zu 15 Masse % an thermisch verwertbaren Bestandteilen bzw. Brennstoffpartikeln vorhanden sein können. Diese beträchtliche Menge an Brennstoffpartikeln ist für die Herstellung von Biomassebrennstoff nutzbar und trägt stark zu einer Effizienzsteigerung der Biomasseherstellung bei. Dazu ist es notwendig, die im Presswasser vorhandenen Brennstoffpartikel von den flüssigen Bestandteilen zu separieren, damit die von dem Presswasser abgetrennten Brennstoffpartikel in einem nächsten Schritt getrocknet werden können. In einem weiteren Schritt werden die getrockneten Brennstoffpartikel in die gewünschte Form gepresst. Auch wenn dieses Formpressen bei Feuerungsanlagen, die mit eingeblasenem Verbrennungsgut arbeiten, weggelassen werden kann, so werden die Brennstoffpartikel aufgrund der besseren Handhabbarkeit und Transportierbarkeit im Normalfall zu Pellets, Brickets oder dergleichen verpresst.

Die aus dem Presswasser ausgepresster Biomasse entzogenen Brennstoffpartikel können, wie oben beschrieben, in einer separaten Brennstoffherstellung zu Brennstoffpellets o.ä. verarbeitet werden. Dabei kann die Herstellung von Brennstoffpellets ähnlich aufgebaut sein wie das in EP 1 443 096 A beschriebene Verfahren zur Brenstoffpelletherstellung.

Bei dem aus der EP 1 446 096 A bekannten Verfahren muss ein bei dem Auspressen entstehender Presskuchen zuerst in einem zweiten Zerkleinerungsschritt zerkleinert werden, wenn durch das Auspressen der Presskuchen stark verdichtet ist, bevor die ausgepresste Biomasse einem Trocknungsschritt, wie etwa einem thermischen Trocknen, zugeführt wird. Dieser zweite Zerkleinerungsschritt vor dem Trocknen kann in dem erfindungsgemäßen Verfahren durch ein zweites Auspressen der aus dem Presswasser gewonnenen, noch nassen Brennstoffpartikel ersetzt werden.

Nach dem Trocknen wird die nun trockene Biomasse einem Formpressen zugeführt, in dem es in die gewünschte Form gebracht wird. Dies kann wie oben schon erwähnt, in Granulat-, Pellet-, Bricket- oder jeder anderen verdichteten Form sein. Der Verfahrensschritt des Formpressens ist jedoch nicht zwingend erforderlich, da der Biomassebrennstoff in Form von losen Brennstoffpartikeln auch als Schüttgut verwendet werden kann.

Da, wie oben beschrieben, die erhaltenen Brennstoffpartikel aus dem Presswasser, ähnlich wie in dem in der EP 1 443 096 A beschriebenen Verfahren, direkt zu Biomassebrennstoff verarbeitet werden können, können die aus dem Presswasser von den flüssigen Bestandteilen separierten Brennstoffpartikel auch im nassen Zustand dem zweiten Zerkleinerungsschritt oder gleich dem Trocknungsschritt der ausgepressten Biomasse aus dem Verfahren gemäß EP 1 443 096 A zugeführt werden und im weiteren Verlauf des Verfahrens zusammen mit der ausgepressten Biomasse, d.h. zusammen mit dem Presskuchen, zu Brennstoffpellets verarbeitet werden.

Die nassen Brennstoffpartikel können zum Erhöhen der Wirkung des ersten Auspressschrittes als Füllstoff der zerkleinerten Biomasse aus dem Verfahren nach EP 1 443 096 A beigemischt werden. Zusätzlich hätte dies den Vorteil, dass noch eventuell nach dem Separationsschritt in den Brennstoffpartikeln enthaltenes Presswasser zumindest teilweise mechanisch, also mit einfachen Mitteln, herausgepresst wird.

Die nassen Brennstoffpartikel, wie sie nach der Separation des Presswassers in flüssigen und festen Bestandteilen vorliegen, können, bevor sie einem anderen Verfahren beigemengt werden, zuerst einer Trocknung unterzogen werden, dem ein mechanisches Auspressen vorgeschaltet sein kann. Dabei können die nun im trockenen Zustand vorliegenden Brennstoffpartikel dem Formpressen der getrockneten Biomasse des Herstellungsprozess nach EP 1 443 096 A zugeführt werden. Dies hat den Vorteil, dass die relativ kleinen Brennstoffpartikel aus dem Presswasser, verglichen mit den Bestandteilen des Presskuchens, schneller trocknen und so eine Überhitzung / Verkokung der Brennstoffpartikel vermieden wird, was der Fall sein kann, wenn die Brennstoffpartikel zusammen mit den Presskuchenbestandteilen bei hohen Trocknungstemperaturen getrocknet werden.

Ein weiterer Vorteil der trockenen Zuführung der kleinen Brennstoffpartikel zu dem Verfahren der Brennstoffpelletherstellung nach EP1 443 096 A ist dessen Wirkung als eine Art Bindemittel, was den weiteren Verfahrensschritt des Formpressens positiv beeinflusst.

Auch eine Kombination der (Wieder-) Zuführung oder Teilrückführung der Brennstoffpartikel aus dem Presswasser zu den restlichen Bestandteilen der eingesetzten Biomasse in nasser wie auch in trockener Form ist, je nach gegebenen Umständen, möglich. Auch ist es nicht erforderlich, dass die aus dem Presswasser gewonnenen Brennstoffpartikel aus der gleichen Biomasse stammen wie die Bestandteile, denen sie zugeführt werden.

Dabei umfasst die eingesetzte Biomasse alle organischen und anorganischen Stoffe, die einer thermischen Verwertung zugeführt werden können und energetisch nutzbar sind.

Zur Separation der festen Bestandteile (= Brennstoffpartikel) von den flüssigen Bestandteilen können sowohl mechanische, thermische als auch chemische oder biologische Verfahren Anwendung finden. Im Folgenden sollen nur beispielhaft einige davon aufgezeigt werden: Filtern, Sieben, Zentrifugieren, Dekantieren, Sedimentieren, Gefriertrocknen, Sprühtrocknen, Ausflocken, Verdampfen, Aufsaugen der flüssigen Bestandteile, Ausfällen, etc..

Generell gilt, dass die nach einer Separation erhaltenen Brennstoffpartikel kleiner sind als die Biomassebestandteile, die nach einem der beiden Zerkleinerungsvorgänge vorliegen. Eine erste Zerkleinerung findet vor dem Auspressen der Biomasse statt und eine weitere zweite Zerkleinerung kann erfolgen, wenn der aufgrund des Auspressens entstandene Presskuchen derart verdichtet ist, dass eine Trocknung ohne Zerkleinerung einen höheren Energieaufwand darstellt als die Zerkleinerung des Presskuchens. Dabei kann der Presskuchen auch dem Zerkleinerungsschritt der eingesetzten Biomasse beigefügt werden.

Anstatt das Presswasser in seine flüssigen Bestandteile und in seine festen Bestandteile zu trennen, kann das Presswasser auch mit Verdickungsmitteln, wie beispielweise mit Sägemehl oder Sägespänen, eingedickt werden und so ein gewünschter Feuchtigkeitsgehalt eingestellt werden. Damit die so erhaltene Masse einem Herstellverfahren für Brennstoffpellets zugeführt werden kann, wird die Masse bevorzugt dem Presskuchen zugegeben. Zu beachten ist hierbei, dass die in dem Presswasser enthaltenen Schadstoffe vor dem Eindicken aus dem Presswasser entfernt oder in dem Presswasser unschädlich gemacht worden sind, damit sie bei der Verbrennung nicht in die Atmosphäre gelangen.

Egal welches Separationsverfahren angewendet wird, es ist darauf zu achten, dass sich Schadstoffe, mit der die Biomasse eventuell belastet ist, sich bevorzugt in den flüssigen Bestandteilen des Presswassers befinden. Daher wird bei mit Schadstoff belastetem Presswasser bevorzugt, dass dies vor der Separation der flüssigen von den festen Bestandteilen bevorzugt mit Bakterien oder chemischen Zusätzen behandelt wird, so dass die Bakterien die Schadstoffe entweder in unschädliche Stoffe umwandeln oder eine Verbindung mit den Schadstoffen derart entsteht, dass die Bakterien oder chemischen Zusatzstoffe zusammen mit den Schadstoffen in einer einfachen Weise aus dem Presswasser entnommen und umweltschonend entsorgt werden können.

Bei manchen Separationsverfahren, wie beim Filtern oder beim Sieben, kann das schadstoffbelastete Presswasser auch nach der Separation der flüssigen von den festen Bestandteilen durch Zusätze, wie Bakterien oder anderen chemischen Substanzen, von den Schadstoffen befreit werden.

Nach der Separation und der Reinigung oder auch in umgekehrter Reihenfolge können die verbleibenden flüssigen Bestandteile der normalen Abwasserentsorgung zugeführt oder auch vorzugsweise als Gießwasser für Pflanzen oder als Dünger benutzt werden.

Nachfolgend wird das Verfahren anhand der angefügten Figur und einer bevorzugten Ausführungsform im Einzelnen beschrieben.

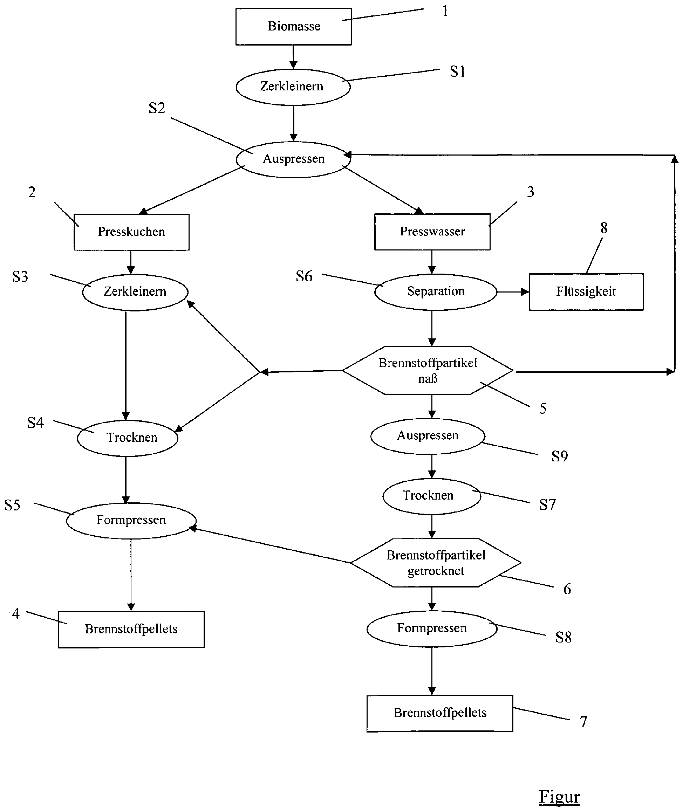

Die Figur zeigt eine schematische Darstellung des erfindungsgemäßen Verfahrens. Das in der Figur schematisch dargestellte Verfahren zeigt in den Schritten S1 bis S5 das Verfahren, welches durch die veröffentlichte Patentanmeldung EP 1 443 096 A1 beschrieben wird. Hierbei wird die eingesetzte Biomasse 1 in einem ersten Schritt S1 zerkleinert. In einem zweiten Schritt S2 werden durch Auspressen eine im Wesentliche feste Fraktion, im weiteren Presskuchen 2 genannt, und eine im Wesentliche flüssige Fraktion, im weiteren Presswasser 3 genannt, erzeugt. Dabei wird die eingesetzte Biomasse 1 bei dem mechanischen Auspressen S2 weiter zerkleinert.

In dem von der veröffentlichten Patentanmeldung EP 1 443 096 A1 beschriebenen Verfahren wird der Presskuchen 2 in einem nächsten Schritt S3 nochmals zerkleinert, da die ausgepresste Biomasse 1 durch das Auspressen S2 stark verdichtet sein kann, was einer Trocknung S4 negativ gegenübersteht. Die Zerkleinerung S3 dient der Oberflächenerhöhung, womit ein Trocknungsschritt S4, welcher den zerkleinerten Presskuchen 2 trocknet, energetisch günstiger ablaufen kann. In einem weiteren Schritt S5 wird die Masse bzw. der Brennstoff, d.h. der zerkleinerte und getrocknete Presskuchen 2, in die gewünschte Form, z. B. in die Form von Brennstoffpellets 4, gepresst.

Das bei dem Auspressen S2 neben dem Presskuchen 2 entstehende Presswasser 3 wird in dem erfindungsgemäßen Verfahren weiter aufbereitet, da das Presswasser 3 je nach eingesetzter Biomasse 1 und verwendetem Zerkleinerungsvorgang S1 noch einen relativ großen Anteil an Feststoffen beinhaltet. Diese Feststoffe oder auch Brennstoffpartikel können von dem Presswasser 3 separiert und einer Brennstoffherstellung, wie beispielsweise der oben beschriebenen Herstellung von Brennstoffpellets 4, zugeführt werden. Dazu ist es zunächst notwenig, in einem Schritt S6 die Feststoffe von dem Presswasser 3 zu separieren. In der bevorzugten Ausführungsform kann dies über einen Schrägfilter, welcher z. B. zur Abwasserreinigung eingesetzt wird, erfolgen. Die dabei eingesetzten Filtermaterialien können dabei günstigerweise so gewählt werden, dass sie bei der Herstellung von Brennstoffpellets 4, 7 mit verarbeitet werden können. Bevorzugt werden hierbei Vlies- oder Papierfilter eingesetzt.

Bei der Verwendung eines Schrägfilters wird vorzugsweise dem Presswasser 3 vor dem Separationsschritt S6 ein Flockungsmittel zugegeben, damit auch sehr kleine Teilchen (Trübstoffe) aus dem Presswasser 3 entfernt werden können. Ein weiterer Vorteil besteht darin, dass dadurch die Sedimentation, d. h. das Absetzen der in dem Presswasser 3 befindlichen Teilchen, schneller vonstatten geht. Außerdem wird durch das Ausflocken die minimale Teilchengröße erhöht und es kann so ein gröberer Filter gewählt werden, womit das Ausfiltern S6 der festen Bestandteile schneller ablaufen kann.

Die auf die schräg gestellten Lamellen herabgesunkenen Schwebstoffe bzw. noch nassen Brennstoffpartikel 5 rutschen im Weiteren in den Schlammtrichter des Schrägfilters hinab und können von hier der weiteren Herstellung von Brennstoffpellets 4, 7 zugeführt werden.

Zur direkten Herstellung von Brennstoffpellets 7 wird in einem weiteren Schritt S7 die Masse getrocknet, wobei die Masse vorher in einem Schritt S9 ausgepresst wird und dann von vorbei- oder umströmender erwärmter Luft im Schritt S7 getrocknet wird. Die nun getrockneten Brennstoffpartikel 6 werden dann in einem weiteren Schritt S8 in die gewünschte Form der Brennstoffpellets 7 gepresst.

In einer anderen Ausführungsform des erfindungsgemäßen Verfahrens werden die nassen Brennstoffpartikel 5 aus dem Schlammtrichter des Schrägfilters der zerkleinerten Biomasse nach dem Schritt S1 zugeführt. Dies hat den Vorteil, dass die nassen Brennstoffpartikel im Schritt S2 mit ausgepresst werden und so in den Herstellungsprozess für Brennstoffpellets 4 gemäß EP 1 443 096 integriert sind.

In einer weiteren Ausführungsform werden die nassen Brennstoffpartikel 5 dem Trocknungsschritt S4 der Brennstoffpelletherstellung gemäß dem Verfahren nach EP 1 443 096 zugeführt und mit dem Presskuchen 2 zu Brennstoffpellets 4 verarbeitet.

Eine andere Ausführungsform sieht vor, dass die getrockneten Brennstoffpartikel 6 zusammen mit dem zerkleinerten und getrockneten Presskuchen 2 im Schritt S5 zu Brennstoffpellets 4 geformt werden.

Alle Ausführungsformen haben gemeinsam, dass die nach dem Auspressen S2 im Presswasser verbleibenden Reststoff-Bestandteile, hier Brennstoffpartikel 5, 6 genannt, zu Brennstoffpellets 7 oder 4 verarbeitet werden und somit nur die nach der Separation S6 abgeschiedene Flüssigkeit 8 entsorgt werden muss.

Diese Restflüssigkeit 8 wird vorzugsweise mit Bakterien oder chemischen Zusätzen versetzt, damit die darin vorhandenen Schadstoffe entweder in unschädliche Stoffe umgewandelt werden oder derart an diese Bakterien oder chemischen Zusätze gebunden werden, dass sie in einfacher Art und Weise aus der verbliebenen Flüssigkeit entfernt werden können. Die dann schadstofffreie Flüssigkeit kann zum Gießen von Pflanzen oder in konzentrierter Form als Dünger eingesetzt werden oder der normalen Abwasserentsorgung zugeführt werden.

### Bezugszeichenliste

- 1: Biomasse
- 2: Presskuchen
- 3: Presswasser
- 4: Brennstoffpellets
- 5: Brennstoffpartikel nass
- 6: Brennstoffpartikel getrocknet
- 7: Brennstoffpellets
- 8: Flüssigkeit

- S1: Zerkleinern
- S2: Auspressen
- S3: Zerkleinern
- S4: Trocknen
- S5: Formpressen
- S6: Separation
- S7: Trocknen
- S8: Formpressen
- S9: Auspressen

## Patentansprüche

1. Verfahren zur Gewinnung von Brennstoff und Dünger aus beim Auspressen von Biomasse (1) entstehendem, biomassehaltigem Presswasser (3), bei dem die Brennstoffpartikel (5, 6), die in dem beim Auspressen entstehenden Presswasser (3) enthalten sind, von dem Presswasser (3) separiert und zumindest teilweise einer Herstellung von Biomassebrennstoff (4, 7) zugeführt werden und die verbleibende Restflüssigkeit (8) des Presswassers (3) nach ihrer Separation und Reinigung als Dünger verwendet wird.

2. Verfahren nach Anspruch 1, wobei die aus dem Presswasser (3) separierten Brennstoffpartikel (5, 6) in nasser Form (5) oder in trockener Form (6) einer Herstellung von Biomassebrennstoff (4) zugeführt werden, welche einen bei dem Auspressen (S2) entstehenden Presskuchen (2) zu Biomassebrennstoff (4) verarbeitet.

3. Verfahren nach Anspruch 1 oder 2, bei dem das Presswasser (3) vor oder nach dem Separieren der Brennstoffpartikel (5, 6) mit Bakterien oder chemischen Zusätzen behandelt wird, die die in dem Presswasser (3) enthaltenen Schadstoffe in unschädliche Stoffe umwandeln oder mit den Schadstoffen eine Verbindung derart eingehen, das die Bakterien oder die chemischen Zusatzstoffe zusammen mit den Schadstoffen in einfacher Weise aus dem Presswasser (3) entnommen und umweltschonend entsorgt werden können.

4. Verfahren nach einem der Ansprüche 1, 2 oder 3, wobei die Brennstoffpartikel (5, 6) durch
*a*. Sieben,
*b.* Verdampfen der flüssigen Bestandteile,
*c*. Zentrifugieren
*d.* Chemisches Ausfällen,
*e*. Dekantieren,
*f*. Abschöpfen der schwimmenden Bestandteile,
*g*. Mittels Kapillareffekt,
*h.* Mittels Gefriertrocknen,
*i*. Mittels Sprühtrocknen
von dem Presswasser (3) getrennt werden.

5. Verfahren nach einem der Ansprüche 1, 2 oder 3, wobei die Brennstoffpartikel (5, 6) durch Papier und/oder textile Materialien aus dem Presswasser (3) gefiltert werden, wobei das Filtermaterial mit den abgefilterten Brennstoffpartikeln (5,6) der Herstellung von Biomassebrennstoff (4, 7) zugeführt wird.

6. Verfahren nach einem der Ansprüche 1, 2 oder 3, wobei das Presswasser (3) durch Sand gefiltert wird und die Brennstoffpartikel (5, 6) mittels eines Siebes von dem Sand getrennt werden.

7. Verfahren nach einem der Ansprüche 3 bis 6, wobei die Restflüssigkeit (8) nach ihrer Reinigung in konzentrierter Form als Dünger eingesetzt wird

## Claims

1. Method for obtaining fuel and fertilizer from biomass-containing press water (3) that is formed during the press-out of biomass (1), in which method the fuel particles (5, 6) present in the press water (3) that is formed during the press-out are separated from the press water (3) and fed at least in part to a production process for biomass fuel (4, 7) and the remaining residual liquid (8) of the press water (3) is, after its separation and clean-up, used as fertilizer.

2. Method according to Claim 1, wherein the fuel particles (5, 6) separated from the press water (3) are fed in wet form (5) or in dry form (6) to a production process for biomass fuel (4), which production process processes a press cake (2) that is formed during the press-out (S2) to yield biomass fuel (4).

3. Method according to Claim 1 or 2, in which the press water (3) is, before or after the separation of the fuel particles (5, 6), treated with bacteria or chemical additives which convert the harmful substances present in the press water (3) into harmless substances or combine with the harmful substances such that the bacteria or the chemical additives together with the harmful substances can be removed from the press water (3) in a simple manner and disposed of in an environmentally-friendly manner.

4. Method according to any one of Claims 1, 2 and 3, wherein the fuel particles (5, 6) are separated from the press water (3) by
a. sieving,
b. vaporization of the liquid constituents,
c. centrifugation,
d. chemical precipitation,
e. decanting,
f. skimming-off of the floating constituents,
g. by means of the capillary effect,
h. by means of lyophilization,
i. by means of spray drying.

5. Method according to any one of Claims 1, 2 and 3, wherein the fuel particles (5, 6) are filtered from the press water (3) through paper and/or textile materials, wherein the filter material containing the filtered-off fuel particles (5, 6) is fed to the production process for biomass fuel (4, 7).

6. Method according to any one of Claims 1, 2 and 3, wherein the press water (3) is filtered through sand and the fuel particles (5, 6) are separated from the sand by means of a sieve.

7. Method according to any one of Claims 3 to 6, wherein the residual liquid (8) is, after its clean-up, used in concentrated form as fertilizer.

## Revendications

1. Procédé destiné à l'obtention de combustible et d'engrais à partir d'une eau de pressage (3) contenant de la biomasse et résultant du pressage de ladite biomasse (1), selon lequel les particules de combustible (5, 6) qui sont contenues dans l'eau de pressage (3) obtenue à partir du pressage de la biomasse, sont séparées de l'eau de pressage (3) et soumises, tout au moins en partie, à un processus en vue de la fabrication d'un combustible issu de la biomasse (4, 7), tandis que le liquide résiduel (8) restant de l'eau de pressage (3) est utilisé comme engrais après sa séparation et son épuration.

2. Procédé selon la revendication 1, où les particules de combustible (5, 6) séparées à partir de l'eau de pressage (3) sont soumises à un processus, sous une forme humide (5) ou sous une forme sèche (6), en vue de la fabrication de combustible issu de la biomasse (4), durant laquelle un tourteau (2), obtenu à partir du pressage (S2), est transformé en combustible issu de la biomasse (4).

3. Procédé selon la revendication 1 ou 2, selon lequel l'eau de pressage (3) est traitée au moyen de bactéries ou des additifs chimiques avant ou après la séparation des particules de combustible (5, 6), lesquels bactéries ou additifs chimiques transforment les substances toxiques contenues dans l'eau de pressage (3) en des substances non toxiques ou établissent une liaison avec les substances toxiques, de telle sorte que les bactéries ou les additifs chimiques peuvent, d'une manière simple, être extraits de l'eau de pressage (3) avec les substances toxiques, puis éliminés dans le respect de l'environnement.

4. Procédé selon l'une des revendications 1, 2 ou 3, où les particules de combustible (5, 6) sont séparées de l'eau de pressage (3) par :
a. criblage ;
b. évaporation des composants liquides ;
c. centrifugation ;
d. précipitations chimiques ;
e. décantation ;
f. prélèvement des composants flottants ;
g. au moyen d'un effet capillaire ;
h. au moyen d'une lyophilisation ;
i. au moyen d'un séchage par pulvérisation.

5. Procédé selon l'une des revendications 1, 2 ou 3, où les particules de combustible (5, 6) sont filtrées de l'eau de pressage (3) par l'intermédiaire de matériaux en papier et/ou en textile, où le matériau de filtration est introduit avec les particules de combustible (5, 6) filtrées en vue de la fabrication de combustible issu de la biomasse (4, 7).

6. Procédé selon l'une des revendications 1, 2 ou 3, où l'eau de pressage (3) est filtrée par du sable et où les particules de combustible (5, 6) sont séparées du sable au moyen d'un crible.

7. Procédé selon l'une des revendications 3 à 6, où le liquide résiduel (8) est utilisé comme engrais dans une forme concentrée après son épuration.
